# EUROPEAN PATENT APPLICATION

(11) **EP 2 807 917 A1**
(43) Date of publication of application: **03.12.2014**
(21) Application number: 13169414.3
(22) Date of filing: 28.05.2013
(51) Int. Cl.: A01K 1/03, A01K 1/035

(54) **System for preventing hyperthermia in minks kept in cages and method for using the said system**

(71) Applicant: Leeijen, Justinus Leonardus Joseph, 5986 NT Beringe (NL)
(72) Inventor: Leeijen, Justinus Leonardus Joseph, 5986 NT Beringe (NL)
(74) Representative: Janssen, Paulus J. P.

(57) **Abstract**

The present invention pertains to a system for preventing hyperthermia in minks (400) kept in cages (10, 11, 12, 13) comprising a semi-continuous row (5, 6) of separate cages (10, 11, 12, 13), each cage being provided on the inside with an open container (20, 21, 22) for keeping water, the opening of the container corresponding to a size of the head of a mink (400) to be kept in the cage, a water duct (30) running along the row of cages, a unit (35) for providing water in the duct at a pressure above atmospheric pressure, at each open container a conduit (31, 32, 33) for providing a fluid connection between the interior of the water duct (30) and the interior of the open container (20, 21, 22),each conduit being provided with a valve (50) that can take a first position wherein the fluid connection is blocked, and a second position wherein the fluid connection is established, wherein the valve is actuable to change between the first and second position using a predetermined actuating signal. The invention also pertains to a method of using this system.

## Description

### Field of the invention

The present invention pertains to a system for preventing hyperthermia in minks (*Neovison vison, Mustela vison*) kept in cages, and to a method of applying the said system.

### Background art

In mink farming, the minks are generally kept in wired cages, placed in a shed for sheltering the minks from environmental circumstances such as direct sunlight, rain, snow, wind etc. The cages are typically placed at human working height (around 70 cm to 140 cm) to allow easy access by a human operator to conduct animal treatment and other operations needed for adequately keeping the minks. A problem in this type of mink farming is hyperthermia and ultimately hyperpyrexia of the minks. Especially under mink kits, mortality due to hyperthermia can be very high. Hyperthermia in mink kits is one of the major causes of death. Hyperthermia is the clinical situation of elevated body temperature due to failed thermoregulation that occurs when a body produces or absorbs more heat than it dissipates. Extreme temperature elevation then becomes a medical emergency requiring immediate treatment to prevent death. The most common cause is heat stroke, an acute temperature elevation caused by exposure to excessive heat, or combination of heat and humidity, that overwhelms the heat-regulating mechanisms. Hyperthermia in particular becomes a problem when the temperature in the cages rises to a level near the body temperature of the minks. This temperature rise is typically due to environmental circumstances such as high outside temperature, too much direct sunlight on the roof of the shed etc.

Physical exertion is an additional factor that may cause generation of heat beyond the ability to cool. In addition to the heat, humidity of the environment may reduce the efficiency of the body's normal cooling mechanisms. Heat loss mechanisms are limited to vasodilation of skin vessels and increased rate of sweating. Minks have only a very limited possibility of sweating since they have sweating glands only in their foot soles.

In mink farming, several measures are typically taken to try and prevent hyperthermia. Mechanical cooling methods such as fans are used to remove heat and to restore the body's ability to regulate its own temperatures. Air conditioning is often not an option since the sheds are typically not insulated. Other measures taken are providing shed roofs that reflect sunlight, such as white roofs. Alternatively, roofs are cooled using water pumped up from the ground. However, all of these measures appear to have only a limited effect on the actual temperature in the cages and this might explain why the problem of hyperthermia also exists when these measures are taken. Active cooling methods too cool body parts of the mink have in practice proven to be not economically viable. Spraying cooling water for example, or providing a bath of cool water in each of the cages creates a mess in the cages and leads to the need of far more operator time per mink. The main effort therefore in the art of mink farming is directed to providing a sufficient supply of cool drinking water. Still, even when drinking water is sufficiently available, hyperthermia is abundant during periods of high environmental temperatures.

### Object of the invention

It is an object of the invention to provide a system and method that are able to mitigate the problem hyperthermia in minks kept in cages in an economically attractive way. Mitigating hyperthermia in this sense means to at least decrease the number of minks suffering from hyperthermia when compared to situation wherein the present invention is not applied. Preferably the decrease is to a level five to ten times less when compared to situation wherein the present invention is not applied, leading to an almost prevention of the problem.

### Summary of the invention

In order to meet the object of the invention, a system according to the "field of the invention" as indicated *supra* is devised, comprising a semi-continuous row of separate cages, each cage being provided on the inside with an open container for keeping water, the opening of the container corresponding to a size of the head of a mink to be kept in the cage, a water duct running along the row of cages, a unit for providing water in the duct at a pressure above atmospheric pressure, at each open container a conduit for providing a fluid connection between the interior of the water duct and the interior of the open container, each conduit being provided with a valve that can take a first position wherein the fluid connection is blocked, and a second position wherein the fluid connection is established, wherein the valve is actuable to change between the first and second position using a predetermined actuating signal.

This invention was based on the recognition that the problem of hyperthermia cannot be mitigated through the improvement of drinking water supply. Applicant recognised that minks stop drinking water when the drinking water has a temperature above 40°C, and thus, even if sufficient drinking water is available, hyperthermia can still occur. In the art the option of providing water for cooling body parts has not been pursued since it requires the presence of a filled open water container in each of the cages. Manually filling such containers is not an economic viable option and providing separate water ducts to each and every container is far too expensive and complicated to be economically viable. One duct with respective conduits to each and every container is also not an option since the last container in the row (*i.e.* the container furthest away from the water supply/pressure unit), due to pressure loss in the duct, will have a far longer filling time than the first container in the row (*i.e.* the container closest to the water supply/pressure unit), leading to either inadequate replenishment of containers in the last section of the row or continuously flooding containers in the first section of the row. Applicant recognised that in order to meet the object of the invention however, there is no need to have the cooling water present continuously. Simply having the cooling water available at time periods when needed, is sufficient to mitigate the problem of hyperthermia. This on its turn led to the recognition that a valve may be applied in each of the conduits, which valve can take a first position wherein the fluid connection is blocked, and a second position wherein the fluid connection is established. The valve on its turn is actuable to change between the first and second position using a predetermined actuating signal to provide the needed filling of the container when required. The presence of such valves on its turn enables a system wherein one single water duct is being used, the conduits being in fluid connection with this one water duct. Since not all conduits are open at all times, the problem of flooding of containers near the proximal end of the duct (*i.e.* the part at which the water is supplied into the duct) and containers not being adequately filled near the distal end of the duct (*i.e.* the part furthest away from the proximal end) does not need to be present. Also, the invention has proven to be far more adequate than the use of valves external of the conduit such as closures regulated by a float in a water container. An external valve less reliable and more expensive since there are inherently moving parts, and such external valve is prone to fouling and destruction by the mink.

The invention also pertains to a method for preventing hyperthermia in minks kept in separate cages, the cages being provided as a semi-continuous row in a shed, each cage being provided on the inside with an open container for keeping water, the opening of the container corresponding to a size of the head of a mink to be kept in the cage, and running along the row of cages a water duct, each open container being in fluid connection via a corresponding conduit with the water duct, each conduit being provided with a valve that can take a first position wherein the fluid connection is blocked, and a second position wherein the fluid connection is established, the method comprising providing water in the duct at a pressure above atmospheric pressure, and actuating the valve to change from the first to the second position.

### Definitions

*A semi-continuous row* is a row of at least twenty units, in particular at least fifty units and more in particular at least one hundred units to over a thousand units. There is no restriction to the special confirmation of the row (being for example straight or curved), and the units do not need to be contiguous It may even be that in between each cage there is an element that is not part of the row of cages), although having a row of contiguous cages is typical in mink farming.

*Corresponding to a size of the head of the mink* means that the mink can plunge his head substantially, meaning more than only his mouth or tongue, typically at least half of its head volume, into the container.

*Water* is any aqueous fluid mainly consisting of water or a fluid freely miscible with water, optionally comprising (naturally present) contaminants or additives such as preservatives, antimicrobials, salts, feed additives, dissolved gases etc.

*Default* means a situation or condition that obtains in the absence of active intervention.

A *shed* is a structure serving as shelter.

### Embodiments of the invention

In an embodiment of the system according to the invention, the valve in a default situation takes the first position. This embodiment allows intermittent filling of the water containers while at the same time keeping the pressure in the duct to an adequate level of operation. This is a further improvement in preventing flooding of the containers.

In another embodiment the actuating signal is provided in essence at the same time to each of the valves in the conduits in order to fill all containers in essence during the same time period. This embodiment allows a relatively easy to control filling procedure of all the containers along the length of the row. Individual filling requires individual control which is inherently more expensive. Applicant showed that in order to meet the object of the invention, regular filling of the containers at the same time is adequate.

In yet another embodiment the actuating signal is a predetermined pressure of the water in the duct. The water pressure has proven to be ideally suitable and very simply to control the valves in the duct. Pressure valves are readily available, reliable and require hardly any, if at all, maintenance. A valve could for example be chosen that opens at a pressure slightly beneath the normal water pressure obtainable using the pressure unit at hand. Operatively connecting the duct to the unit and allowing pressure to build up to normal pressure would then be sufficient to open the valves. When the connection is shut off, for example by closing a cut off valve present between the pressure unit and the water duct, the pressure will inherently decrease and as soon as it is below the predetermined opening pressure of the valves in the conduits, these valves close. Depending on the flow rate that is allowed by the valves, the pressure unit has to devised to be able and provide sufficient pressure/flow in order to keep the pressure in the duct above the opening pressure of the valves in the conduits.

Therefore in still another embodiment the valve in the second position allows a flow rate of at most 25% of the volume of the water container per minute. In this embodiment the flow rate is chose to be very small with regard to the volume of water to be filled into the container, such that the pressure drop in the water duct due to this flow remains so low that a simple pressure unit can counteract this pressure drop, in order to keep the valves open. Preferably, the valve in the second position allows a flow of at most 15% of the volume of the water container per minute.

Other embodiments of the system are reflected in the appended claims and in the examples section *infra.*

In a first embodiment of the method according to the invention all valves are actuated essentially at the same time, for reasons as indicated *supra.*

The same way, in a second embodiment of this method the valves are actuated to change from the first to the second position upon the pressure in the duct reaching a predetermined pressure. The filling of the open containers preferably takes more than 4 minutes, or even more than 6 minutes.

In yet another embodiment the open containers are filled intermittently, for reasons indicated *supra.* Preferably the containers are filled intermittently at an interval that depends on environmental circumstances. For example, depending on the temperature measured in (one or more) of the cages, the interval for filling the water containers is set.

### Examples

Figure 1 schematically shows a shed for mink farming
Figure 2 schematically shows a few contiguous cages as present in the shed of figure 1
Figure 3 schematically shows parts of one cage that are used in the present invention

### Figure 1

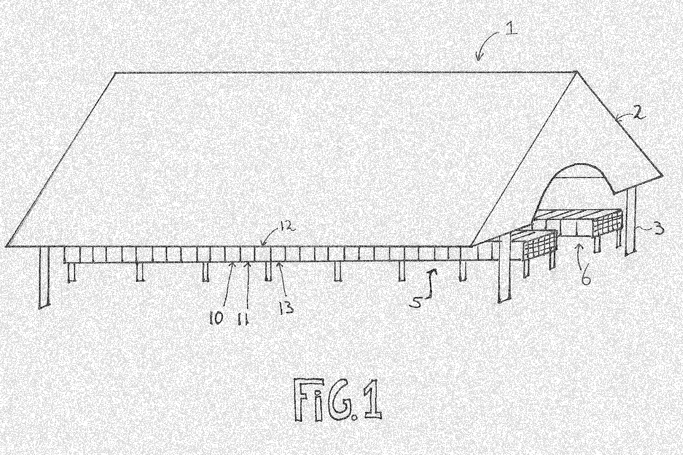

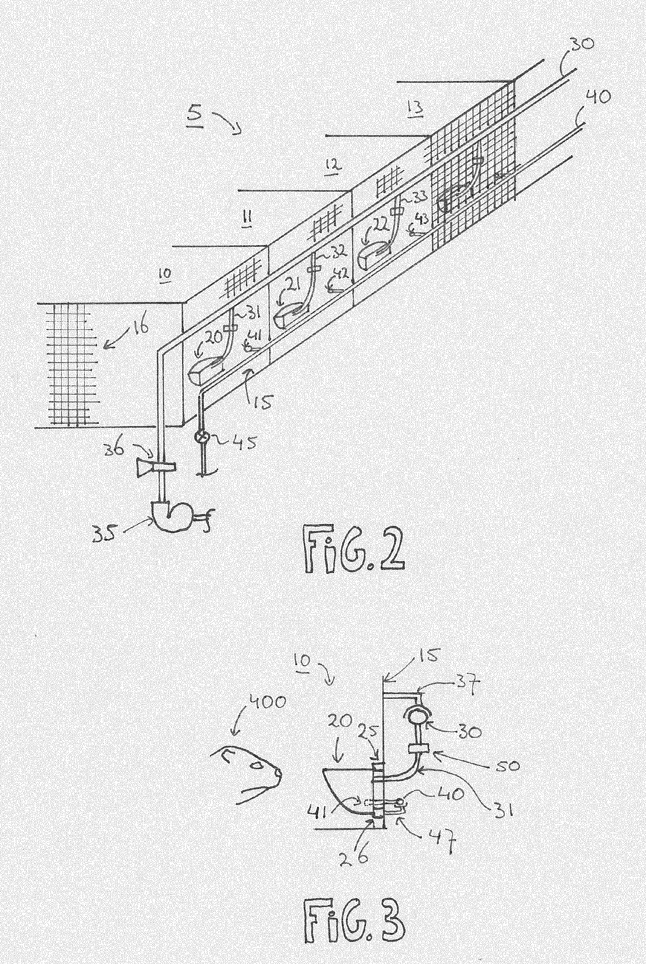

Figure 1 schematically shows a shed 1 for mink farming. In this particular embodiment the shed 1 is an open shed, having a closed roof 2 made of reflective and coated metal, supported by poles 3. There are no side walls to allow wind to blow through the shed. The shed provides shelter for two rows 5 and 6, each row constituting a semi-continuous row of 1200 separate, contiguous wired cages (for reasons of clarity, figure 2 only shows a small number of cages), totalling a length of about 400 meters. Of row 5, four separate cages 10, 11, 12 and 13 are indicated. Each cage is meant for one adult mink to live in, optionally having a number of mink kits that live with the mother in the same cage.

### Figure 2

Figure 2 schematically shows a few contiguous cages 10, 11, 12 and 13 as present in the shed of figure 1. Each shed is a wired cage. For reasons of clarity, only part of the wire meshes are shown in figure 2. Of the first cage 10, part of the wire meshes of the side wall 16 are depicted. Of the front wall 15 also part the wire meshes are depicted. The same is true for the front walls of cages 11 and 12. Of cage 13, the complete front wall wire meshes are shown.

In front of the cages there is a first water duct 40 that is used for supplying drinking water to each of the cages 10, 11, 12 and 13. The duct is provided with a valve 45 to open the water supply. In each cage there is a standard drinking nipple (40, 41 and 42 respectively for cages 10, 11 and 12) that is in fluid connection with duct 40. This way, the mink 400 (see figure 3) present in the cage can drink whenever there is a metabolic demand for that. In front of the cages there is another water duct 30, a water duct having an internal diameter of 18 mm. The duct is made of white opaque plastic with a black inner lining. Duct 30 is in operative connection with pumping unit 35 which unit is suitable to supply ground water to the duct 30. For this, the pump is able to supply water into the duct at a pressure of 2 atmospheres. In order to control the pressure in the duct 30, there is provided a cut off valve 36. By closing the valve, there will be no pressure build up in duct 30. By opening the valve 36, the pressure may increase t a maximum of about 2 atmospheres.

Each cage is provided with an open water container 20, 21, 22 and 23 (the latter not indicated as such in figure 2) for cages 10, 11, 12 and 13 respectively. These open containers each have an inner volume of 250 ml. The dimension of the top opening are such that an adult mink can put a substantial part of his head into the container (see figure 3 for a schematic view of the relative dimensional relationship between the head of an adult mink and the top opening of the container). Each container can be brought in fluid connection with duct 30 via small conduits 31, 32 and 33 respectively. These conduits are made of white plastic and have an inner diameter of 4 mm. In each conduit a pressure valve is provided (see valve 50 in figure 3). This valve takes a first position below a pressure of 1.2 atmosphere in duct 30 wherein the fluid connection between the interior of the container and the interior of the duct 30 is blocked. Above 1.2 atmosphere, valve 50 takes a second position wherein the fluid connection is established. This way, the valve is actuable by controlling the pressure in duct 30. When the cut off valve 36 is opened and pump 35 is in operation, the water pressure in the duct will swiftly increase to a level above 1.2 atmosphere. Upon reaching this level, all valves will open and water starts to flow into the open containers. The valves are such that the water flow is very low to prevent the pressure from dropping below 1.2 atmosphere. In this embodiment the water containers are filled with 200 ml of water in about 6 to 8 minutes. Depending on the number of cages in the row, it may be that the water containers present in the cages near the proximal end of the duct 30 (*i.e.* near the pump) are filled with somewhat more than 200 ml of water, for example 220 ml of water. At the same time, it may be that the water containers present in the cages near the distal end of the duct 30 (*i.e.* furthest away from the pump), may be filled with slightly less than 200 ml, for example 180 ml of water. By choosing a proper size of water container and a minimal effective amount of water needed to prevent or at least mitigate hyperthermia, it can be prevented that containers near the proximal end flood.

### Figure 3

Figure 3 schematically shows parts of cage 10 that are used in the present invention. It is side elevation of some essential parts. In particular, front wall 15 of cage 10 is depicted and water ducts 30 and 40 in cross-section. These ducts are removably fastened to the front wall 15 using clips 37 and 47 respectively. On the inside of the cage, water container 20 can be seen, which container is clicked into the wire meshes using elements 25 and 26. Duct 40 is used for drinking water provision, and therefore in fluid connection with drinking nipple 41 that is shown in dotted lines since it is situated behind water container 20. Container 20 is in fluid connection with duct 30 via conduit 31. In this conduit there is provided valve 50, the operation of which is explained *supra* in connection with figure 2.

By having a large amount of cooling water available in the open container, mink 400 has the ability to cool its body parts, in particular its head. It has been shown that this way hyperthermia can be prevented, even when the temperature in the cage rises to a level near 35 °C or above.

In practice, cut off valve 36 is closed in a default situation. This also leaves each of the valves of the conduits (31, 32 and 33) in a closed position. During very hot times, for example after each interval of sixty minutes, cut off valve 36 is manually opened to fill the water containers. After about eight minutes, the containers are filled and the valve 36 is closed. The minks use the water for cooling their body parts. In about an hour the water in the containers will be exhausted and a new supply of cooling water is needed. For this, valve 36 is again opened for about eight minutes. This way, the containers are filled intermittently with a regular interval. The demand of cooling water for preventing hyperthermia determines the length of the interval. In another embodiment the opening of the valve 36 is fully computer controlled, depending on automatic measurements of environmental circumstances , in particular temperature, wind force and humidity.

## Claims

1. System for preventing hyperthermia in minks (400) kept in cages (10, 11, 12, 13) comprising:
- a semi-continuous row (5, 6) of separate cages (10, 11, 12, 13), each cage being provided on the inside with an open container (20, 21, 22) for keeping water, the opening of the container corresponding to a size of the head of a mink (400) to be kept in the cage,
- a water duct (30) running along the row of cages,
- a unit (35) for providing water in the duct at a pressure above atmospheric pressure,
- at each open container a conduit (31, 32, 33) for providing a fluid connection between the interior of the water duct (30) and the interior of the open container (20, 21, 22),
- each conduit being provided with a valve (50) that can take a first position wherein the fluid connection is blocked, and a second position wherein the fluid connection is established, the valve is actuable to change between the first and second position using a predetermined actuating signal.

2. A system according to claim 1, **characterised in that** the valve in a default situation takes the first position.

3. A system according to any of the preceding claims, **characterised in that** the actuating signal is provided in essence at the same time to each of the valves in the conduits in order to fill all containers in essence during the same time period.

4. A system according to any of the preceding claims, **characterised in that** the actuating signal is a predetermined pressure of the water in the duct.

5. A system according to any of the preceding claims, **characterised in that** the valve in the second position allows a flow rate of at most 25% of the volume of the water container per minute.

6. A system according to any of the preceding claims, **characterised in that** the valve in the second position allows a flow of at most 15% of the volume of the water container per minute.

7. A system according to any of the preceding claims, **characterised in that** the duct and conduits have a light reflecting outer surface.

8. A system according to any of the preceding claims, **characterised in that** the row comprises at least 300, preferably at least 500 more preferably at least 1000 separate cages.

9. A system according to claim 8, **characterised in that** the row comprises between 1000 and 1500 cages.

10. A method for preventing hyperthermia in minks (400) kept in separate cages (10, 11, 12, 13), the cages being provided as a semi-continuous row (5, 6), preferably in a shed (1), each cage being provided on the inside with an open container (20, 21, 22) for keeping water, the opening of the container corresponding to a size of the head of a mink (400) to be kept in the cage, and running along the row of cages a water duct (30), each open container being in fluid connection via a corresponding conduit (31, 32, 33) with the water duct, each conduit being provided with a valve (50) that can take a first position wherein the fluid connection is blocked, and a second position wherein the fluid connection is established, the method comprising:
- providing water in the duct at a pressure above atmospheric pressure,
- actuating the valves of each of the conduits to change from the first to the second position.

11. A method according to claim 10, **characterised in that** all valves are actuated essentially at the same time.

12. A method according to any of the claims 10 and 11, **characterised in that** the valves are actuated to change from the first to the second position upon the pressure in the duct reaching a predetermined pressure.

13. A method according to any of the claims 10 to 12, **characterised in that** the filling of the open containers takes more than 4 minutes, preferably more than 6 minutes.

14. A method according to any of the claims 10 to 13, **characterised in that** the open containers are filled intermittently.

15. A method according to any of the claims 10 to 14, **characterised in that** the containers are filled intermittently at an interval that depends on environmental circumstances.
